# EUROPEAN PATENT SPECIFICATION

(11) **EP 1 821 500 B1**
(45) Date of publication and mention of the grant of the patent: **14.07.2010**
(21) Application number: 07100031.9
(22) Date of filing: 02.01.2007
(51) Int. Cl.: H04M 1/02

(54) **Multi-directional sliding module and application thereof**
Multidirektionales Schiebemodul und Anwendung davon
Module coulissant multidirectionnel et application de celui-ci

(30) Priority: 26.01.2006 CN 200610002333
(43) Date of publication of application: 22.08.2007
(73) Proprietor: HTC Corporation, Taoyuan County 330 (TW)
(72) Inventor: Shih, Chin-Chung, Taoyuan City (TW); Chen, Ching-Shih, Taoyuan City (TW)
(74) Representative: Viering, Hans-Martin

(56) References cited:
- WO-A-2006/072657
- KR-A- 20060 086 524
- TW-B- 279 121
- US-A1- 2006 061 552

## Description

### Field of the Invention

The present invention generally relates to a multi-directional sliding module. More particularly, this invention relates to a multi-directional sliding module moving on a single surface for a portable electronic device.

### Background of the Invention

Since wireless communication technology is highly developed, mobile phones are becoming increasingly light and easy to hold. Nowadays, most people use mobile phones to communicate with others. Therefore, the mobile phone has become a necessary electronic device in people's lives.

Due to the popularity of mobile phones, mobile phone manufacturers are working extremely hard to increase mobile phone functions in order to satisfy various requirements desired by users. For example, some of the mobile phones provide PDA functions, such as address book, calendar, minutes and/or agendas. Some mobile phones provide electronic games therein for the users to play during their idle time. Further, some mobile phones have digital cameras thereon so that users can take beautiful pictures to share with their friends.

However, a current mobile phone generally has a size smaller than that of a palm, and especially, a smaller mobile phone only has a size almost similar to that of an egg. Therefore, the surface area for the keyboard and display on a mobile phone is limited. Integrating all the foregoing functions into such a small mobile phone is difficult. To increase the available surface area, some mobile phones are designed to dispose the keyboard and the display respectively on two electronic modules, which are connected to each other via a sliding mechanism, so as to construct, for example, a slide cell phone including a sliding keyboard and a sliding display.

In the meantime, some of the mobile phone manufacturers design a keyboard module, which has a key arrangement similar to that of a standard QWERTY keyboard, to prevent users from changing their input habits and thus to facilitate their typing speed, and also utilize a display with a landscape view for user to type like using a computer. However, the quasi QWERTY keyboard on the mobile phones is not suitable to be used for dialing telephone numbers. Therefore, some of the mobile phone manufactures further design a PDA mobile phone with two keyboard modules. The PDA mobile phone with two keyboard modules normally adopts three electronic modules stacked together for respectively disposing the display, the quasi QWERTY keyboard and the telephone keyboard thereon, and includes different sliding modules coupling the three electronic modules together so as to enable the display, the quasi QWERTY keyboard and the telephone keyboard to be opened in different directions.

However, while the mobile phone is getting small, the mobile phone with three stacked electronic modules is not only increased in size and weight but also inconvenient to be carried. Therefore, there is a need to reduce the thickness of the mobile phone, which is able to be opened in different directions, such that the mobile phone could be reduced in size while providing various input functions.

WO 2006/072657 A discloses a cell phone with a keypad that can be shifted wherein a moving mechanism allows a layer to be extracted out of his rest position.

Further, KR 2006/0086524 A describes a mobile phone comprising two stacked electronic modules which can be shifted with respect to each other

### Summary of the Invention

It is an objective of the present invention to provide a multi-directional sliding module whose slide can be operated along different directions on a single plane.

It is another objective of the present invention to provide a multi-directional sliding module coupled with two electronic modules of a portable electronic device so that the two electronic modules can horizontally and vertically be opened by the user conveniently.

It is yet another objective of the present invention to provide a multi-directional sliding module with a dynamic slide using an attracting force, such as the magnetic force, to engage with the track in a part route thereof to improve the sliding stability of two electronic modules of an electronic device.

To accomplish the above objectives, the present invention provides a multi-directional sliding module. The multi-directional sliding module is preferably utilized in a portable electronic device having a first electronic module and a second electronic module able to slide on each other. The multi-directional sliding module includes a first track, a second track and a slide. The first track and the second track are formed on the first electronic module, and are connected together on a single plane with a predetermined angle formed therebetween. The slide is connected to the second electronic module and can move along the first track and the second track such that the second electronic module is able to be slid out from the first electronic module so as to expose a numerical keypad or a quasi QWERTY keyboard. The predetermined angle is preferably about 90 degrees. When the first electronic module and the second electronic module are slid out along the first track, e.g. along the long side of the portable electronic device, the portable electronic device exposes a numerical keypad on the second electronic module to operate the portable electronic device as a mobile phone. When the first electronic module and the second electronic module are slid out along the second track, e.g. along the short side of the portable electronic device, the portable electronic device exposes a quasi QWERTY keyboard on the second electronic module to allow a user to type and the aspect ratio of a display on the first electronic module is similar to that of a computer display..

The multi-directional sliding module can further include a dynamic sliding mechanism with a third track, an opening formed on the third track, a dynamic slide, and a guiding device for guiding the dynamic slide into the third track through the opening while the dynamic slide is aligned with the opening so as to allow the dynamic slide sliding on the third track. In addition, the third track can further comprise another opening to allow the dynamic slide to escape from the third track.

The multi-directional sliding module can further utilize a wedge-shaped block disposed above the anther opening to push the dynamic slide out of the third track while the dynamic slide is aligned with the anther opening. The multi-directional sliding module can further utilize a magnetic device disposed above the another opening, and the dynamic slide and the magnetic device are made of a magnetic material. In addition, the adjacent surfaces of the dynamic slide and the magnetic device possess the same polarity to push the dynamic slide out of the third track. In an embodiment, the dynamic slide is made of a magnetic material and the guiding device is made of a ferromagnetic material. In another embodiment, the dynamic slide is made of a ferromagnetic material and the guiding device is made of a magnetic material. In further another embodiment, the dynamic slide and the guiding device are made of a magnetic material, and the adjacent surfaces thereof possess different polarities.

Accordingly, the multi-directional sliding module according to the preferred embodiment of the present invention can easily be installed between the first electronic module and the second electronic module and enable the first electronic module and the second electronic module to slide on a single plane along at least two directions. In conjunction with the dynamic sliding mechanism, the dynamic slide engages with the track in a part route of the track while the first electronic module is sliding on the second electronic module so that the moving stability between the first electronic module and the second electronic module of the portable electronic device can therefore be increased.

### Brief Description of the Drawings

The foregoing aspects and many of the attendant advantages of this invention will be more readily appreciated as the same becomes better understood by reference to the following detailed description, when taken in conjunction with the accompanying drawings, wherein:
FIG. 1 illustrates a portable electronic device with a multi-directional sliding module according to a first embodiment of the present invention;
FIGS. 2A to 2C illustrate interior components of the first preferred embodiment of FIG. 1;
FIG. 3 illustrates a dynamic sliding mechanism of the multi-directional sliding module according to one embodiment of the present invention;
FIGS. 4A to 4C illustrate interior components of a portable electronic device with a multi-directional sliding module according to a second embodiment of the present invention; and
FIG. 5 illustrates components of the second preferred embodiment of the portable electronic device with the multi-directional sliding module illustrated in FIGS. 4A to 4C.

### Detailed Description of the Preferred Embodiment

The following description is currently the best implementation of the present invention. This description is not to be taken in a limiting sense but is made merely to describe the general principles of the invention. The scope of the invention should be determined by referencing the appended claims.

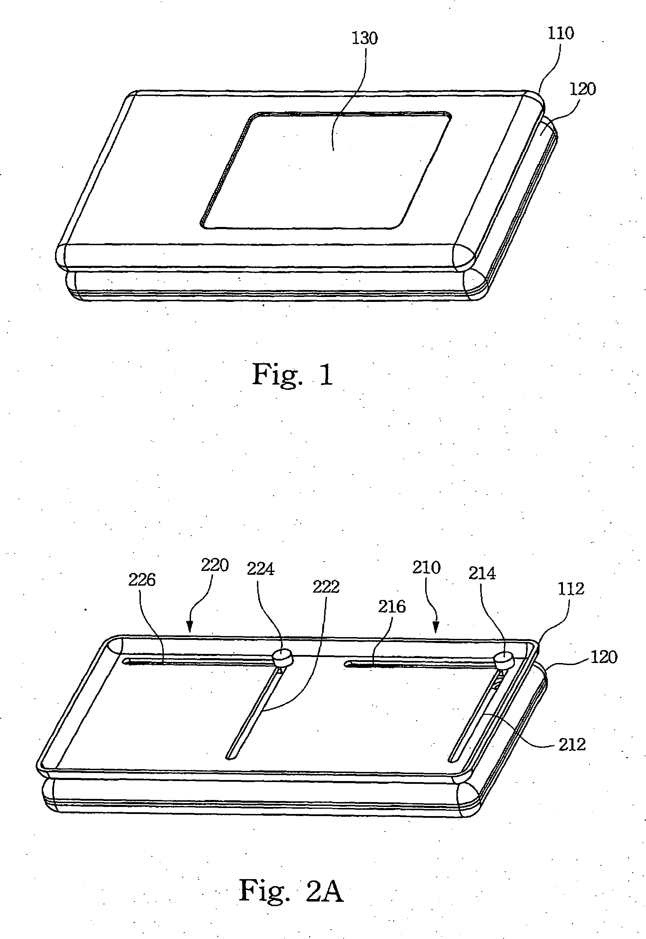

FIG. 1 illustrates a portable electronic device with a multi-directional sliding module according to a first embodiment of the present invention. The portable electronic device includes a first electronic module 110 and a second electronic module 120. A display 130 is disposed on the first electronic module 110.

FIGS. 2A to 2C show interior components of the portable electronic device according to the first embodiment for illustrating the sliding procedure thereof. For clear illustration to the sliding procedure, a part of the first electronic module 110 is removed to expose a first shell 112, and a first sliding mechanism 210 and a second sliding mechanism 220 therein. The first sliding mechanism 210 includes a first slide 214, a first track 216, and a second track 212. The second sliding mechanism 220 includes a second slide 224, a first track 226 and a second track 222.

The first track 216 and the second track 212 are connected to each other with a predetermined angle, more preferably a right angle, formed therebetween. In this embodiment, the first track 216 and the second track 212 are connected together in an "L" shape. However, in other embodiment, the first track 216 and the second track 212 can be connected together in other shapes such as "V", "X", "+" and "T" shapes. The first slide 214 can move along the first track 216 and the second track 212. In addition, the first track 226 and the second track 222 are also connected to each other with the abovementioned predetermined angle, more preferably the right angle, formed therebetween such that the second slide 224 can move along the first track 226 and the second track 222.

Accordingly, the first shell 112 of the first electronic module 110 can move on the second electronic module 120 along at least two directions through the first sliding mechanism 210 and the second sliding mechanism 220.

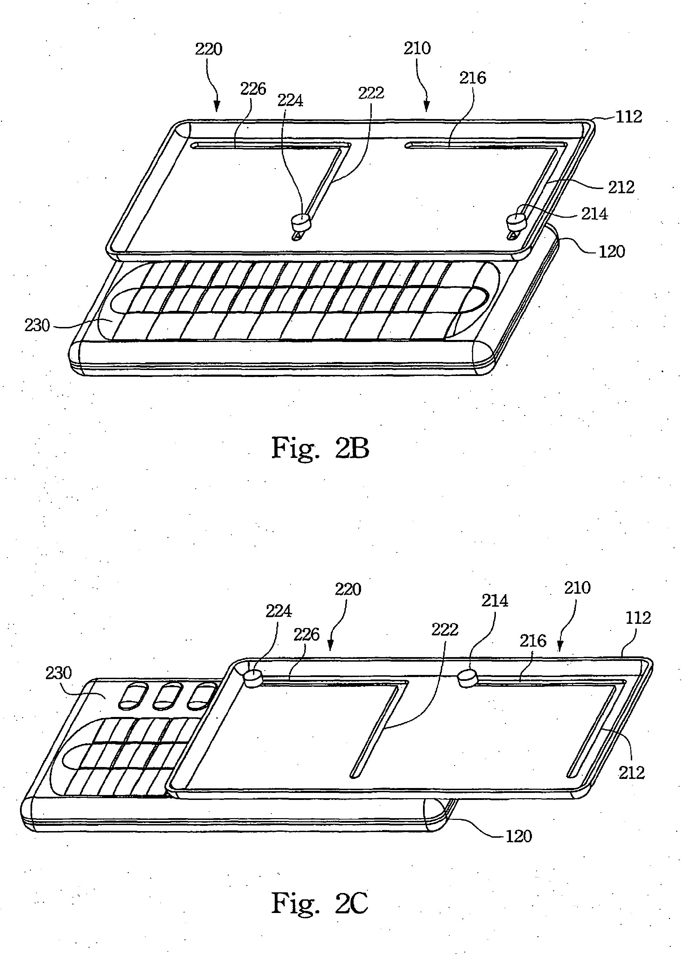

Referring to FIG. 2B, while the first shell 112 is moved along the second track 212 and the second track 222, such as along the short side of the portable electronic device, a part of operating components on the surface 230 of the portable electronic device, e.g. a quasi QWERTY keyboard or a touch pad, can be exposed. In this open configuration, the display 130 as shown in FIG. 1 presents a transverse display mode, which has an aspect ratio similar to a computer display, for users to conveniently read information thereon, and the exposed quasi QWERTY keyboard can enable the users to type quickly.

Referring to FIG. 2C, while the first shell 112 is moved along the first track 216 and the first track 226, such as along the long side of the portable electronic device, a part of operating components on the surface 230 of the portable electronic device, e.g. a telephone keyboard or a touch pad, can be exposed. In this open configuration, the portable electronic device operates in a mobile phone mode for users to conveniently dial the telephone number and answer the telephone.

Therefore, the two electronic modules of the portable electronic device according to the present invention can easily be moved relative to each other along at least two directions so as to expose a suitable operating interface for the user to operate the portable electronic device. In addition, since all of the tracks and the slides work in the same plane, the portable electronic device can utilize only two electronic modules to provide a horizontal operating mode and a vertical operating mode, that is, a typing mode and a mobile phone mode. In comparison with the conventional three-stacked portable electronic device, the portable electronic device according to the present invention can effectively reduce the thickness and the size thereof.

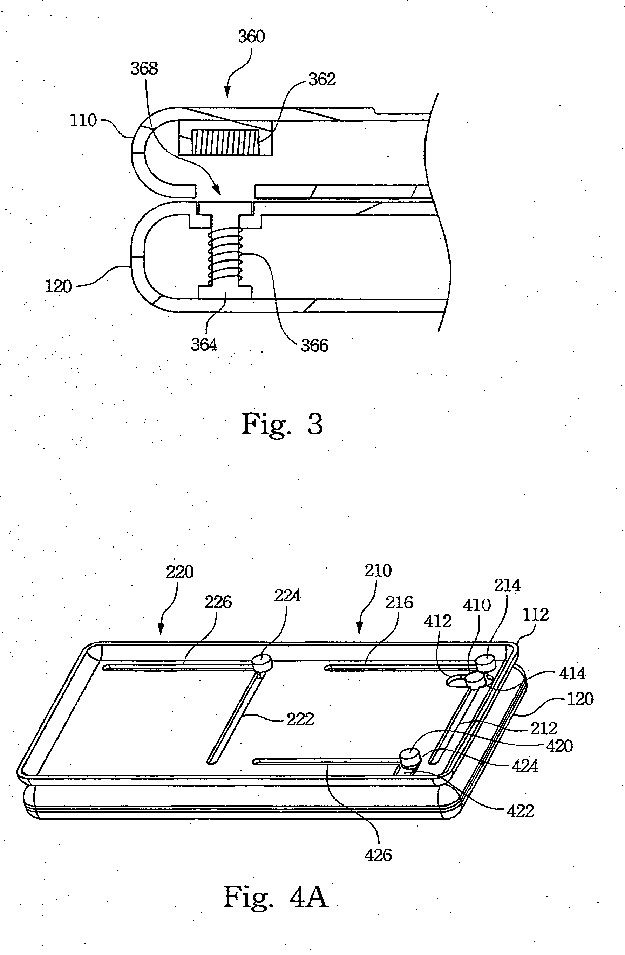

FIG. 3 illustrates a dynamic sliding mechanism of the multi-directional sliding module according to one embodiment of the present invention. The dynamic sliding mechanism 360 includes a guiding device 362, a dynamic slide 364, and tracks (referring to FIGS. 4A to 4C). While the dynamic slide 364 is aligned with the guiding device 362, the dynamic slide 364 is able to be attracted into the track through the opening 368 of the track so as to increase the sliding reliability between the first electronic module 110 and the second electronic module 120. The dynamic sliding mechanism 360 further includes an elastic device 366 to assist the dynamic slide 364 to return back to the second electronic module 120. The guiding device 362 is preferably an attracting device so that the dynamic slide 364 and the guiding device 362 can attract each other by an attracting force. For example, the dynamic slide 364 is made of a magnetic material and the guiding device 362 is made of a ferromagnetic material, the dynamic slide 364 is made of a ferromagnetic material and the guiding device 362 is made of a magnetic material, or both the dynamic slide 364 and the guiding device 362 are made of a magnetic material and adjacent surfaces thereof possess different polarities.

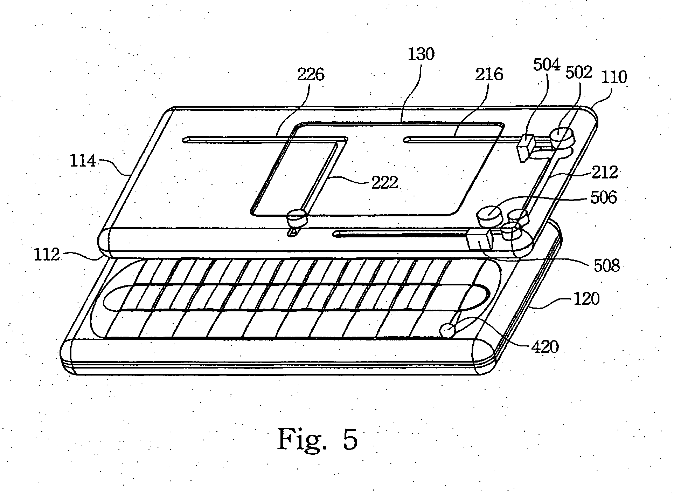

FIGS. 4A to 4C show interior components of a portable electronic device with a multi-directional sliding module according to a second embodiment of the present invention and FIG. 5 illustrates components disposed within the portable electronic device according to the second embodiment. Referring to FIG. 4A to 5, the dynamic sliding mechanism 360 can combine with the foregoing first sliding mechanism 210 and /or the second sliding mechanism 220 for coupling the first electronic module 110 and the second electronic module 120.

A first sliding slide 410 can slide along the first track 216 and the second track 212 of the first sliding mechanism 210, and the second track 212 further includes an opening 414 and an opening 412. A guiding device 502 is disposed above the opening 414 to guide the first dynamic slide 410 into the second track 212 of the first sliding mechanism 210 from the surface 230 of the second electronic module 120 so that the first dynamic slide 410 can be moved along the second track 212.

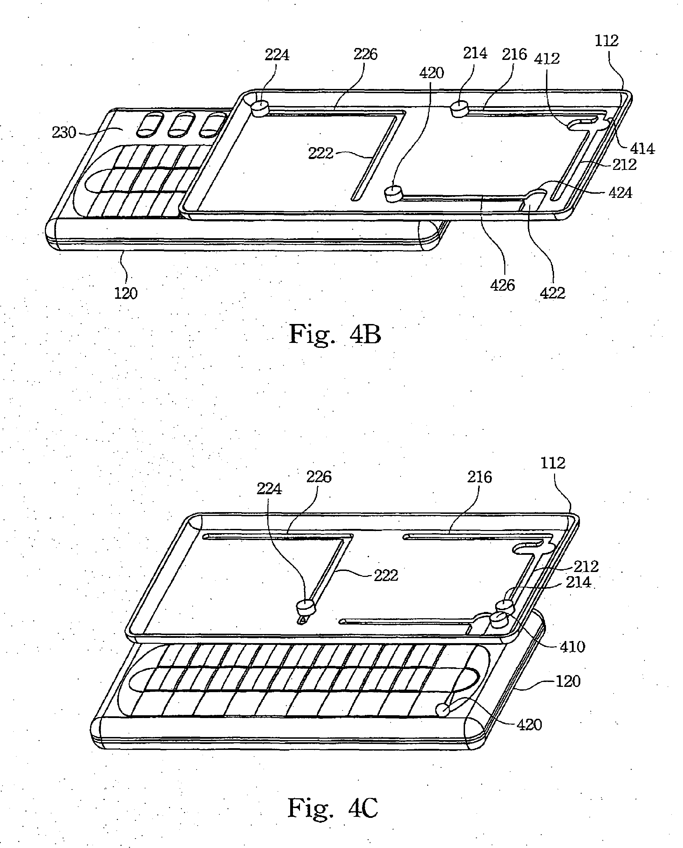

Referring to FIGS. 4C and 5, when the first shell 112 is slid along the second track 212 and the second track 222 after the guiding device 502 attracts the first dynamic slide 410 into the second track 212, the first slide 214 and the first dynamic slide 410 can effectively couple the first electronic module 110 to the second electronic module 120 such that the first electronic module 110 can be slid relative to the second electronic module 120. In conjunction with the second sliding mechanism 220, the first electronic module 110 and the second electronic module 120 can utilize the first slide 214, the second slide 224 and the first dynamic slide 410 to slide on the same plane and thus to improve the sliding stability thereof.

Referring to FIG. 4B, when the first shell 112 is slid along the first track 216 and the first track 226, the incline of a wedge-shaped block 504 (shown in FIG. 5) disposed above the opening 412 pushes the first dynamic slide 410 back to the surface 230 of the second electronic module 120 so as to prevent the first dynamic slide 410 from interference with the movement of the first shell 112. At the same time, a second dynamic slide 420 is attracted by the guiding device 506 (shown in FIG. 5) disposed above an opening 424 to enter into a third track 426 through the opening 424 and then slides along the third track 426. The first electronic module 110 and the second electronic module 120 can simultaneously utilize the first slide 214, the second slide 224 and the second dynamic slide 420 to slide on the same plane and thus to improve the sliding stability thereof.

Referring to FIG. 5, a wedge-shaped block 508 is disposed above an opening 422 of the third track 426. When the second dynamic slide 420 is slid toward a direction parallel to the second track 212, the wedge-shaped block 508 can push the second dynamic slide 420 back to the surface 230 of the second electronic module 120. Therefore, in conjunction with the dynamic sliding mechanism, the multi-directional sliding module according to the preferred embodiment of the present invention can not only effectively be opened in multiple directions but also increase the sliding stability for the portable electronic device.

When the first dynamic slide 410 and the second dynamic slide 420 are made of a magnetic material, other magnetic devices (not shown) can be disposed above the opening 412 and the opening 422 and face to the first dynamic slide 410 and the second dynamic slide 420 respectively for replacing or assisting the elastic device 366, the wedge-shaped block 504 and the wedge-shaped block 508 to push the first dynamic slide 410 and the second dynamic slide 420 back into the second electronic module 120. Preferably, the surfaces of the magnetic devices facing to the first dynamic slide 410 and the second dynamic slide 420 respectively possess the same polarities as adjacent surfaces of the first dynamic slide 410 and the second dynamic slide 420.

Accordingly, the multi-directional sliding module according to the preferred embodiment of the present invention not only enables the electronic modules of a portable electronic device to be opened along at least two directions and but also increases the sliding stability for the electronic modules of the portable electronic device. Therefore, the functionalities of the portable electronic device can be improved and the portable electronic device can be operated by users more easily.

As is understood by a person skilled in the art, the foregoing preferred embodiments of the present invention are illustrative of the present invention rather than limiting of the present invention.

## Claims

1. A portable electronic device comprising :
a first electronic module (110);
a second electronic module (120);
a multi-directional sliding module coupling the first electronic module (110) to the second electronic module (120) for allowing the first electronic module (110) to slide relative to the second electronic module (120), wherein the multi-directional sliding module further comprises:
a first track (216) formed on the first electronic module (110);
a second track (212) formed on the first electronic module (110) and connected to the first track (216) on a single plane with a predetermined angle formed therebetween;
a slide (214) connected to the second electronic module (120) and moved along the first track (216) and the second track (212) when the first electronic module (110) slides relative to the second electronic module (120) ;
**characterized in that** the multi-directional sliding module further comprises :
a third track (426) formed on the first electronic module (110);
a first opening (424) formed on the third track (426);
a first dynamic slide (420); and
a first guiding device (506) to guide the first dynamic slide (420) into the third track (426) through the first opening (424) while the first dynamic slide (420) is aligned with the first opening (424), wherein the third track (426) further comprises a second opening (422) formed thereon to allow the first dynamic slide (420) to escape from the third track (426) and back to the second electronic module (120).

2. The portable electronic device of claim 1, wherein the predetermined angle is about 90 degrees.

3. The portable electronic device of claim 1, wherein the second electronic module (120) further includes a keyboard module with a numerical keypad for dialing telephone numbers and a quasi QWERTY keyboard for typing.

4. The portable electronic device of claim 3, wherein the second electronic module (120) is able to be slid out from the first electronic module (110) along the first track (216) to expose the numerical keypad.

5. The portable electronic device of claim 4, wherein the second electronic module (120) is able to be slid out from the first electronic module (110) along the second track (212) to expose the quasi QWERTY keyboard.

6. The portable electronic device of claim 1, further comprising an elastic device (366) coupled to the first dynamic slide (420) for pushing the first dynamic slide (420) out of the third track (426).

7. The portable electronic device of claim 1, further comprising a first wedge-shaped block (508) disposed above the second opening (422) for pushing the first dynamic slide (420) out of the third track (426) while the first dynamic slide (420) is aligned with the second opening (422).

8. The portable electronic device of claim 1, wherein the first guiding device (506) is a magnetic device disposed above the first opening (424), wherein the first dynamic slide (420) and the magnetic device are made of a magnetic material, and adjacent surfaces thereof possess a same polarity.

9. The portable electronic device of claim 1, wherein the first dynamic slide (420) is made of a magnetic material and the first guiding device (506) is made of a ferromagnetic material.

10. The portable electronic device of claim 1, wherein the first dynamic slide (420) is made of a ferromagnetic material and the first guiding device (506) is made of a magnetic material.

11. The portable electronic device of claim 1, wherein the first dynamic slide (420) and the first guiding device (506) are made of a magnetic material and adjacent surfaces thereof possess different polarities.

12. The portable electronic device of claim 1, wherein the multi-directional sliding module further comprises:
a third opening (414) formed on the second track (212);
a second dynamic slide (410); and
a second guiding device (502) to guide the second dynamic slide (410) into the second track (212) through the third opening (414) while the second dynamic slide (410) is aligned with the third opening (414).

13. The portable electronic device of claim 12, wherein the second track (212) further comprises a fourth opening (412) formed thereon for allowing the second dynamic slide (410) to escape therefrom and back to the second electronic module (120).

14. The portable electronic device of claim 13, further comprising a second wedge-shaped block (504) disposed above the fourth opening (412) for pushing the second dynamic slide (410) out of the second track (212) while the second dynamic slide (410) is aligned with the fourth opening (412).

## Patentansprüche

1. Tragbare elektronische Vorrichtung, aufweisend:
ein erstes elektronisches Modul (110);
ein zweites elektronisches Modul (120);
ein multidirektionales Schiebemodul, das das erste elektronische Modul (110) mit dem zweiten elektronischen Modul (120) kuppelt, um dem ersten elektronischen Modul (110) zu ermöglichen, relativ zu dem zweiten elektronischen Modul (120) zu gleiten, wobei das multidirektionale Schiebemodul ferner aufweist:
eine erste Führung (216), die an dem ersten elektronischen Modul (110) ausgebildet ist;
eine zweite Führung (212), die an dem ersten elektronischen Modul (110) ausgebildet und mit der ersten Führung (216) in einer gemeinsamen Ebene in einem dazwischenliegenden vorgegebenen Winkel verbunden ist;
ein Gleitstück (214), das mit dem zweiten elektronischen Modul (120) verbunden ist und entlang der ersten Führung (216) und der zweiten Führung (212) bewegt wird, wenn das erste elektronische Modul (110) relativ zu dem zweiten elektronischen Modul (120) gleitet;
**dadurch gekennzeichnet, dass** das multidirektionale Schiebemodul ferner aufweist:
eine dritte Führung (426), die an dem ersten elektronischen Modul (110) ausgebildet ist;
eine erste Öffnung (424), die an der dritten Führung (426) ausgebildet ist;
ein erstes dynamisches Gleitstück (420); und
eine erste Führungsvorrichtung (506), um das erste dynamische Gleitstück (420) durch die erste Öffnung (424) hindurch in die dritte Führung (426) zu führen, wenn das erste dynamische Gleitstück (420) zu der ersten Öffnung (424) entsprechend ausgerichtet ist, wobei die dritte Führung (426) ferner eine daran ausgebildete zweite Öffnung (422) aufweist, um dem ersten dynamischen Gleitstück (420) zu ermöglichen, aus der dritten Führung (426) heraus und zurück zu dem zweiten elektronischen Modul (120) zu gelangen.

2. Tragbare elektronische Vorrichtung nach Anspruch 1, wobei der vorgegebene Winkel ungefähr 90 Grad beträgt.

3. Tragbare elektronische Vorrichtung nach Anspruch 1, wobei das zweite elektronische Modul (120) ferner ein Tastaturmodul mit einer Zifferntastatur zum Anwählen von Telefonnummern und einer QWERTY-artigen Tastatur zum Eingeben aufweist.

4. Tragbare elektronische Vorrichtung nach Anspruch 3, wobei das zweite elektronische Modul (120) von dem ersten elektronischen Modul (110) entlang der ersten Führung (216) hervorgeschoben werden kann, um die Zifferntastatur freizulegen.

5. Tragbare elektronische Vorrichtung nach Anspruch 4, wobei das zweite elektronische Modul (120) von dem ersten elektronischen Modul (110) entlang der zweiten Führung (212) hervorgeschoben werden kann, um die QWERTY-artige Tastatur freizulegen.

6. Tragbare elektronische Vorrichtung nach Anspruch 1, ferner aufweisend eine elastische Vorrichtung (366), die mit dem ersten dynamischen Gleitstück (420) gekuppelt ist, zum Heraustreiben des ersten dynamischen Gleitstücks (420) aus der dritten Führung (426).

7. Tragbare elektronische Vorrichtung nach Anspruch 1, ferner aufweisend einen ersten keilförmigen Block (508), der oberhalb der zweiten Öffnung (422) angeordnet ist, zum Heraustreiben des ersten dynamischen Gleitstücks (420) aus der dritten Führung (426), wenn das erste dynamische Gleitstück (420) zu der zweiten Öffnung (422) entsprechend ausgerichtet ist.

8. Tragbare elektronische Vorrichtung nach Anspruch 1, wobei die erste Führungsvorrichtung (506) eine oberhalb der ersten Öffnung (424) angeordnete magnetische Vorrichtung ist, wobei das erste dynamische Gleitstück (420) und die magnetische Vorrichtung aus einem magnetischen Material hergestellt sind und benachbarte Flächen davon eine gleiche Polarität aufweisen.

9. Tragbare elektronische Vorrichtung nach Anspruch 1, wobei das erste dynamische Gleitstück (420) aus einem magnetischen Material hergestellt ist und die erste Führungsvorrichtung (506) aus einem ferromagnetischen Material hergestellt ist.

10. Tragbare elektronische Vorrichtung nach Anspruch 1, wobei das erste dynamische Gleitstück (420) aus einem ferromagnetischen Material hergestellt ist und die erste Führungsvorrichtung (506) aus einem magnetischen Material hergestellt ist.

11. Tragbare elektronische Vorrichtung nach Anspruch 1, wobei das erste dynamische Gleitstück (420) und die erste Führungsvorrichtung (506) aus einem magnetischen Material hergestellt sind und benachbarte Flächen davon unterschiedliche Polaritäten aufweisen.

12. Tragbare elektronische Vorrichtung nach Anspruch 1, wobei das multidirektionale Schiebemodul ferner aufweist:
eine dritte Öffnung (414), die an der zweiten Führung (212) ausgebildet ist;
ein zweites dynamisches Gleitstück (410); und
eine zweite Führungsvorrichtung (502), um das zweite Gleitstück (410) durch die dritte Öffnung (414) hindurch in die zweite Führung (212) zu führen, wenn das zweite dynamische Gleitstück (410) zu der dritten Öffnung (414) entsprechend ausgerichtet ist.

13. Tragbare elektronische Vorrichtung nach Anspruch 12, wobei die zweite Führung (212) ferner eine an derselben ausgebildete vierte Öffnung (412) aufweist, um dem zweiten dynamischen Gleitstück (410) zu ermöglichen, aus derselben heraus und zurück zu dem zweiten elektronischen Modul (120) zu gelangen.

14. Tragbare elektronische Vorrichtung nach Anspruch 13, ferner aufweisend einen zweiten keilförmigen Block (504), der oberhalb der vierten Öffnung (412) angeordnet ist, zum Heraustreiben des zweiten dynamischen Gleitstücks (410) aus der zweiten Führung (212), wenn das zweite dynamische Gleitstück (410) zu der vierten Öffnung (412) entsprechend ausgerichtet ist.

## Revendications

1. Dispositif électronique portable comprenant :
un premier module électronique (110) ;
un deuxième module électronique (120) ;
un module coulissant orientable qui relie le premier module électronique (110) au deuxième module électronique (120), destiné à permettre au premier module électronique (110) de coulisser par rapport au deuxième module électronique (120), dans lequel le module coulissant orientable comprend en outre :
une première piste (216) formée sur le premier module électronique (110) ;
une deuxième piste (212) formée sur le premier module électronique (110) et connectée à la première piste (216) dans un seul plan avec un angle prédéterminé formé entre elles ;
une coulisse (214) connectée au deuxième module électronique (120) et mobile le long de la première piste (216) et de la deuxième piste (212) lorsque le premier module électronique (110) coulisse par rapport au deuxième module électronique (120) ;
**caractérisé en ce que** le module coulissant orientable comprend en outre :
une troisième piste (426) formée sur le premier module électronique (110) ;
une première ouverture (424) formée sur la troisième piste (426) ;
une première coulisse dynamique (420) ; et
un premier dispositif de guidage (506) destiné à guider la première coulisse dynamique (420) dans la troisième piste (426) à travers la première ouverture (424) tandis que la première coulisse dynamique (420) est alignée avec la première ouverture (424), dans lequel la troisième piste (426) comprend en outre une deuxième ouverture (422) formée sur elle de manière à permettre à la première coulisse dynamique (420) de quitter la troisième piste (426) et de revenir vers le deuxième module électronique (120).

2. Dispositif électronique portable selon la revendication 1, dans lequel l'angle prédéterminé est d'environ 90 degrés.

3. Dispositif électronique portable selon la revendication 1, dans lequel le deuxième module électronique (120) comprend en outre un module de clavier avec un clavier numérique destiné à composer des numéros de téléphone et un clavier quasiment QWERTY destiné à saisir des caractères.

4. Dispositif électronique portable selon la revendication 3, dans lequel le deuxième module électronique (120) peut être glissé hors du premier module électronique (110) le long de la première piste (216) de manière à exposer le clavier numérique.

5. Dispositif électronique portable selon la revendication 4, dans lequel le deuxième module électronique (120) peut être glissé hors du premier module électronique (110) le long de la deuxième piste (212) de manière à exposer le clavier quasiment QWERTY.

6. Dispositif électronique portable selon la revendication 1, comprenant en outre un dispositif élastique (366) relié à la première coulisse dynamique (420), destiné à pousser la première coulisse dynamique (420) hors de la troisième piste (426).

7. Dispositif électronique portable selon la revendication 1, comprenant en outre un premier bloc cunéiforme (508) disposé au-dessus de la deuxième ouverture (422) destiné à pousser la première coulisse dynamique (420) hors de la troisième piste (426) tandis que la première coulisse dynamique (420) est alignée avec la deuxième ouverture (422).

8. Dispositif électronique portable selon la revendication 1, dans lequel le premier dispositif de guidage (506) est un dispositif magnétique disposé au-dessus de la première ouverture (424), dans lequel la première coulisse dynamique (420) et le dispositif magnétique sont réalisés dans un matériau magnétique, et leurs surfaces adjacentes présentent une même polarité.

9. Dispositif électronique portable selon la revendication 1, dans lequel la première coulisse dynamique (420) est réalisée dans un matériau magnétique et le premier dispositif de guidage (506) est réalisé dans un matériau ferromagnétique.

10. Dispositif électronique portable selon la revendication 1, dans lequel la première coulisse dynamique (420) est réalisée dans un matériau ferromagnétique et le premier dispositif de guidage (506) est réalisé dans un matériau magnétique.

11. Dispositif électronique portable selon la revendication 1, dans lequel la première coulisse dynamique (420) et le premier dispositif de guidage (506) sont réalisés dans un matériau magnétique et leurs surfaces adjacentes présentent des polarités différentes.

12. Dispositif électronique portable selon la revendication 1, dans lequel le module coulissant orientable comprend en outre :
une troisième ouverture (414) formée sur la deuxième piste (212) ;
une deuxième coulisse dynamique (410) ; et
un deuxième dispositif de guidage (502) destiné à guider la deuxième coulisse dynamique (410) dans la deuxième piste (212) à travers la troisième ouverture (414) tandis que la deuxième coulisse dynamique (410) est alignée avec la troisième ouverture (414).

13. Dispositif électronique portable selon la revendication 12, dans lequel la deuxième piste (212) comprend en outre une quatrième ouverture (412) formée sur elle de manière à permettre à la deuxième coulisse dynamique (410) de quitter celle-ci et de revenir vers le deuxième module électronique (120).

14. Dispositif électronique portable selon la revendication 13, comprenant en outre un deuxième bloc cunéiforme (504) disposé au-dessus de la quatrième ouverture (412) destiné à pousser la deuxième coulisse dynamique (410) hors de la deuxième piste (212) tandis que la deuxième coulisse dynamique (410) est alignée avec la quatrième ouverture (412).
